Europäisches Patentamt

European Patent Office

Office européen des brevets

(19)

(11) Numéro de publication : **0 432 036 B1**

(12) **FASCICULE DE BREVET EUROPEEN**

(45) Date de publication du fascicule du brevet :
**08.06.94 Bulletin 94/23**

(51) Int. Cl.$^5$ : **A01C 1/06**

(21) Numéro de dépôt : **90403449.3**

(22) Date de dépôt : **05.12.90**

(54) **Séchage de graines ou de semences.**

(30) Priorité : **06.12.89 FR 8916135**

(43) Date de publication de la demande :
**12.06.91 Bulletin 91/24**

(45) Mention de la délivrance du brevet :
**08.06.94 Bulletin 94/23**

(84) Etats contractants désignés :
**AT BE CH DE DK ES FR GB GR IT LI LU NL SE**

(56) Documents cités :
**EP-A- 0 013 769
FR-A- 2 111 972
GB-A- 2 025 200
US-A- 3 168 796
US-A- 4 368 591**

(73) Titulaire : **S.E.P.P.I.C., SOCIETE
D'EXPLOITATION DE PRODUITS POUR LES
INDUSTRIES CHIMIQUES
75, quai d'Orsay
F-75321 Paris Cédex 07 (FR)**

(72) Inventeur : **Malandain, Michel
25 rue Marie Stuart
F-78100 Saint-Germain-en-Laye (FR)**
Inventeur : **Trouve, Gérard
134 Chemin du Rozé
F-81100 Castres (FR)**
Inventeur : **Le Borgne, Christine
Le Bousquet
F-81440 Lautrec (FR)**

(74) Mandataire : **Portal, Gérard et al
Cabinet Beau de Loménie
158, rue de l'Université
F-75340 Paris Cédex 07 (FR)**

EP 0 432 036 B1

## Description

La présente invention a essentiellement pour objet l'utilisation d'une poudre séchante pour le séchage de graines ou semences ayant subi un traitement d'enrobage ou de pelliculage.

On sait que l'on peut améliorer les facultés germinatives de graines ou semences par une opération d'enrobage ou de pelliculage destinée à fixer sur ces graines ou semences, de préférence de façon régulière, des produits de traitement ou des additifs spécifiques, en des quantités prédéterminées.

Plus précisément, cette opération consiste à appliquer sur les graines ou semences, par exemple par pulvérisation, malaxage, barattage ou tout autre moyen connu, une "bouillie" de pelliculage ou d'enrobage contenant essentiellement des produits de traitement phytosanitaires, fongicides ou insecticides, des additifs destinés à accélérer la germination (micro-organismes, oligo-éléments) dans une solution aqueuse d'agents filmogènes. Cette bouillie peut en outre contenir divers agents additionnels, comme par exemple des charges, des pigments ou colorants, des plastifiants et des agents mouillants.

Les agents filmogènes pouvant être utilisés pour le pelliculage sont généralement des polymères filmogènes solubles ou dispersibles dans l'eau, ne présentant pas de phytotoxicité et ne provoquant pas de retard ou de baisse de germination. De tels polymères sont par exemple des polymères acryliques, des alcools polyvinyliques, des polylactones et des dérivés cellulosiques. Le document EP-A-0 133 827, incorporé ici par référence, décrit divers exemples de compositions filmogènes pour l'enrobage de supports solides.

L'opération de pelliculage ou d'enrobage permet une utilisation plus rationnelle et plus efficace des produits de traitement et des additifs dosés avec précision sur chaque semence.

Le pelliculage des graines ou semences procure en outre les trois avantages suivants :
- il donne à la graine ou semence un aspect lisse et attrayant, notamment lorsque le film est coloré;
- il permet une identification aisée, par exemple par coloration de surface;
- il procure enfin un meilleur écoulement dans les semoirs et autres dispositifs mécaniques de transfert, dans lesquels les graines glissent parfaitement les unes sur les autres.

Par ailleurs, afin d'assurer une bonne répartition des produits de traitement et additifs sur les graines et semences, la bouillie de pelliculage et notamment la solution filmogène doivent être suffisamment fluides. A cet égard, la teneur en matière sèche dépasse rarement 15 à 20% en poids. Par conséquent, des quantités d'eau relativement importantes (jusqu'à environ 50 g par kilo de semence traitée) sont à éliminer par une opération de séchage.

Cette opération de séchage qui, d'un point de vue industriel, doit être rapide, efficace et peu coûteuse, s'avère généralement délicate. En effet, certaines graines, comme par exemple le soja, absorbent rapidement de l'eau lorsqu'elles sont en contact avec la bouillie de pelliculage. L'excès d'humidité interne en résultant peut conduire à des réactions biochimiques non désirables, altérer la conservation de la graine et modifier sa faculté germinative. De plus l'absorption d'eau s'accompagne généralement d'un gonflement de la graine, qui ne reprend sa forme initiale que très lentement. Or, le film entourant la graine n'est pas toujours suffisamment élastique pour suivre ces variations de volume et des effritements et/ou des craquelures risquent d'apparaître.

Par ailleurs, en cas de séchage insuffisant ou trop lent, on observe la formation d'agglomérats de graines pelliculées. De tels agglomérats ne permettent pas l'obtention de semis réguliers et sont donc à éviter.

Enfin, en ce qui concerne de nombreuses semences, notamment celles de grandes cultures, le surcoût engendré par l'opération de pelliculage, et surtout l'opération de séchage, doit être minime. Cette contrainte rend pratiquement impossible l'utilisation d'appareillages sophistiqués et coûteux.

Parmi les techniques de séchage connues, le soufflage d'air chaud est l'une des plus couramment utilisées.

Pour des graines à haute valeur ajoutée représentant de faibles volumes (potagères, florales, certaines espèces hybrides), on utilise des appareils du type à lit d'air fluidisé. Par contre, pour des semences moins nobles, on utilise de simples tunnels ou turbines ventilées, fonctionnant à des débits élevés.

Cependant, le soufflage d'air présente un certain nombre d'inconvénients qui en limitent l'intérêt.

En effet, l'efficacité de cette technique de séchage reste faible en raison des températures limitées mises en jeu pour ne pas endommager les semences.

En outre, cette technique occasionne de grosses dépenses en raison des coûts d'amortissement du matériel et de consommation d'énergie.

Enfin cette technique provoque certains problèmes de pollution.

Le problème du séchage a été résolu par l'utilisation de poudres séchantes. Plus précisément, des poudres sont saupoudrées sur les graines pelliculées, en restant fixées au filmogène, en évitant ainsi tout risque corrélatif de formation de poussière, lors des manipulations ultérieures des graines ou des semences.

L'utilisation de poudres séchantes est une technique qui ne nécessite aucun investissement coûteux et qui peut être mise en oeuvre de façon aisée sur tous les types de matériels de pelliculage ou d'enrobage exis-

2

tants.

Toutes les poudres séchantes utilisées jusqu'à présent sont à base de silicate de magnésium, en particulier à base de talc ou de serpentine.

Cependant, les graines séchées avec du talc présentent un aspect blanchâtre, mat et terne. Cet inconvénient est négligeable lorsque les graines sont enrobées ou pelliculées avec un agent filmogène incolore, mais devient très pénalisant lorsque le pelliculage est réalisé avec des agents filmogènes colorés ou brillants dont l'un des objectifs est de donner un aspect attrayant à la graine ou à la semence.

La présente invention a pour but de résoudre le problème technique consistant en la fourniture d'une poudre séchante, connue en soi (voir US-A-3168796 et EP-A-0013769), présentant les mêmes avantages que les poudres séchantes à base de silicate de magnésium, sans en avoir les inconvénients précités pour être utilisée pour le séchage de graines ou semences.

Il a été découvert, et ceci constitue la base de la présente invention, que l'utilisation de poudres séchantes à base d'aluminosilicate, et en particulier à base de mica, permettait d'améliorer considérablement l'aspect des graines ainsi séchées. En effet, ces graines présentent un aspect éclatant et leur coloration n'est pas modifiée.

Il a été en outre découvert, de façon tout à fait inattendue, que les quantités de ces nouvelles poudres séchantes à mettre en oeuvre sont plus faibles que les quantités de poudres séchantes connues à base de talc, pour obtenir le même séchage.

Ainsi, selon un premier aspect, la présente invention concerne l'utilisation d'une poudre séchante comme décrite dans la revendication 1.

Selon une caractéristique particulière de l'invention, cet aluminosilicate est choisi parmi le groupe constitué par le mica, les illites ou argiles micacées, les pigments micacés, le kaolin et ses variétés, telles que kaolinite, dickite, nacrite, les montmorillonites ou smectites, les glauconites, les attapulgites, les vermiculites.

Selon un mode de réalisation préféré, l'aluminosilicate précité est le mica.

Les agents absorbants contenus dans une poudre séchante conforme à l'invention peuvent être constitués exclusivement d'un ou de plusieurs aluminosilicates, mais être également constitués d'un ou plusieurs aluminosilicates en mélange avec un ou plusieurs agents absorbants traditionnels comme le talc, la cellulose, la silice. L'homme de métier pourra facilement déterminer des compositions d'agents absorbants selon l'intensité de l'effet brillant que l'on cherche à donner aux supports.

Selon une autre caractéristique particulière de l'invention, cette poudre séchante contient en outre jusqu'à 50% en poids, par rapport au poids total de ladite poudre, d'un pigment, un pigment micacé, un colorant ou une pâte pigmentaire.

Selon une autre caractéristique particulière, une poudre séchante conforme à l'invention contient en outre jusqu'à 50% en poids, par rapport au poids total de la poudre, d'au moins un agent filmogène. La présence d'un tel agent filmogène au sein de la poudre confère à cette dernière une meilleure adhérence sur le support solide à sécher. On peut utiliser tout type d'agent filmogène connu, et dans le cas particulier des graines ou semences, des agents filmogènes de même nature que ceux utilisés pour l'opération d'enrobage.

Selon une autre caractéristique particulière, une poudre séchante conforme à l'invention contient en outre jusqu'à 20% en poids, par rapport au poids total de la poudre, d'au moins un agent d'écoulement, comme en particulier des silices pulvérulentes. L'ajout d'un ou plusieurs agents d'écoulement dans la poudre séchante permet d'améliorer la régularité du saupoudrage sur le support. On peut utiliser comme agent d'écoulement tous ceux utilisés habituellement dans les industries alimentaires ou pharmaceutiques et en particulier des silices pulvérulentes, notamment Aerosil® (marque déposée) ou Sipernat® (marque déposée).

Les poudres séchantes utilisées dans la présente invention présentent les caractéristiques générales suivantes :

- elles ne sont pas toxiques vis-à-vis des supports; dans le cas où le support est une graine, on n'observe aucune modification de la germination;
- elles sont compatibles avec les produits phytosanitaires et n'entraînent aucune modification de leur activité;
- elles présentent un pouvoir absorbant élevé (surface spéficique élevée), et de bonnes structures physiques.

Enfin, selon un second aspect, la présente invention vise à couvrir un procédé pour le séchage de graines ou semences ayant subi un traitement d'enrobage ou de pelliculage, caractérisé en ce qu'il comprend le saupoudrage d'une poudre séchante telle que définie précédemment, en une quantité de 0,5 à 50 g par kilogramme de graines ou semences.

Les exemples non limitatifs suivants illustrent les nouvelles poudres séchantes conformes à l'invention et leur utilisation.

Dans ces exemples, l'aluminosilicate est généralement le mica, qui s'est avéré particulièrement avantageux pour la réalisation de ces nouvelles poudres séchantes.

EXEMPLE 1

100 g de graines sont placés dans une machine HEGE 1 munie d'un bol de 1 000 ml, à fond tournant.

Une bouillie d'enrobage liquide constituée d'un agent filmogène cellulosique coloré de la gamme Sepiret® (marque déposée) et d'un produit phytosanitaire adapté est introduite dans la machine. Un film régulier est formé autour des graines après environ 1 min de malaxage.

Une poudre séchante constituée de 99,5% en poids de mica et 0,5% en poids de silice pulvérulente est à son tour introduite dans la machine et malaxée pendant 30 s avec les graines pelliculées.

On a indiqué au tableau 1 les conditions de pelliculage et l'aspect de différentes semences après séchage par la poudre à base de mica.

Les quantités de produit phytosanitaire, d'agent filmogène et de poudre séchante sont indiquées en grammes pour 100 g de graines nues.

Des essais semblables ont été réalisés à l'échelle industrielle sur des quantités beaucoup plus importantes de graines et on a obtenu les mêmes résultats. La poudre séchante procure aux graines un aspect brillant et un bon glissement.

TABLEAU 1

| Nature de la graine | Phytosanitaire | | Agent filmogène | | Quantité de poudre séchante utilisée (g) | Aspect | |
| | Nature | Quantité uti-lisée (g) | Nature | Quantité uti-lisée (g) | | Avant séchage | Après séchage |
|---|---|---|---|---|---|---|---|
| Colza | OFTANOL T | 2,000 | S. 7109 | 1,000 | 0,300 | Humide et mat terne | Sec lisse brillant |
| Colza | VITAVAX | 2,000 | S. 7020 | 0,700 | 0,200 | Humide et terne | Sec lisse brillant |
| Luzerne | MESUROL + POMARSOL | 3,000 0,300 | S. 2008 | 1,500 | 0,500 | Humide légèrement brillant | Sec brillant |
| Pois | PULSAN + QUINOLATE | 0,125 0,300 | S. 2021 | 0,160 | 0,500 | Mat et hétérogène | Brillant homogène |
| Soja | APRON 35 | 0,200 | S. 2001 | 0,300 | 0,500 | Mat et hétérogène humide | Brillant homogène |
| Soja | VITAVAX 200 FF | 0,400 | S. 2004 | 0,400 | 0,500 | Humide terne mat peu homogène | Lisse brillant sec |
| Tournesol | APRON 35 + BENLATE | 0,600 0,200 | S. 4018 | 1,000 | 0,200 | Humide | Brillant sec |
| Pois cubiques | CAPTANE 400 SD | 0,180 | S. 2020 | 0,250 | 0,500 | Terne humide | Brillant sec |
| Maïs | CORMAISON FI | 0,400 | S. 5013 | 0,200 | 0,200 | Hétérogène peu brillant | Brillant lisse homogène |
| Maïs | QUINOLATE PRO | 0,680 | S. 5011 | 0,200 | 0,100 | Terne peu homogène | Brillant lisse homogène |
| Lin | PRELUDE | 0,200 | S. 2020 | 0,500 | 0,100 | Humide brillant | Sec brillant |
| Haricots nains | CORMAISON FI | 0,100 | S. 2020 | 0,200 | 0,200 | Hétérogène humide mat | Brillant homogène lisse sec |

EP 0 432 036 B1

EXEMPLE 2

On a comparé une poudre séchante, selon l'invention, à base de mica, avec une poudre séchante à base de talc, utilisée jusqu'à présent.

Protocole expérimental :

100 g de graines de colza sont pelliculés dans une machine HEGE 1 par une bouillie contenant des agents phytosanitaires et un film cellulosique et présentant la composition pondérale suivante :

- Mesurol®        : 42,8%
- Pomarsol®       : 4,3%
- Agent filmogène     : 10%
- Eau        : 42,9%

Un premier lot de graines pelliculées est séché par une poudre séchante selon l'invention contenant 99% en poids de mica et 1% en poids d'un agent d'écoulement, à raison de 2 g de poudre séchante par kilogramme de graines.

Trois autres lots de graines pelliculées sont séchés par une poudre séchante à base de talc, à raison de 2 g, 3 g et 5 g par kilogramme de graines, respectivement.

L'efficacité du séchage est mesurée par le nombre et la taille des "agglomérats" de graines de colza, identifiés sur 10 g de graines pelliculées séchées.

Les résultats obtenus ont été reportés au tableau 2.

Ces résultats montrent que la poudre à base de mica selon l'invention est plus efficace que la poudre selon l'art antérieur, à base de talc, puisqu'on observe qu'à la dose de 2 g par kilogramme de graines la poudre à base de mica a le même pouvoir séchant qu'une poudre à base de talc à une dose de 5 g/kg.

De plus, l'aspect des graines séchées au moyen de la poudre conforme à l'invention est brillant alors que celui des graines séchées avec les poudres de comparaison à base de talc est mat et terne.

TABLEAU 2

| Nombre d'agglomérats contenant | Poudre séchante | | | | |
|---|---|---|---|---|---|
| | Sans | Mica 2 g/kg | Talc 2 g/kg | Talc 3 g/kg | Talc 5 g/kg |
| + 10 graines | 6 | 0 | 1 | 0 | 0 |
| de 5 à 10 graines | 29 | 0 | 8 | 2 | 0 |
| de 2 à 5 graines | 46 | 3 | 10 | 5 | 4 |
| Nombre d'agglomérats total | 81 | 3 | 19 | 7 | 4 |

EXEMPLE 3

On a comparé une poudre séchante selon l'invention contenant des agents absorbants de différentes natures, avec une poudre selon l'art antérieur à base de talc. L'efficacité du séchage est mesurée de la même façon qu'à l'exemple 2 par le nombre et la taille des agglomérats de graines de colza pelliculées et séchées. Les résultats obtenus, dont on a reporté au tableau 3 une partie, montre que des poudres séchantes à base de mélange cellulose/mica sont au moins aussi efficaces que les poudres de l'art antérieur à base de talc.

En outre, bien que d'aspect moins brillant qu'avec une poudre séchante contenant du mica seulement, les graines pelliculées et séchées à l'aide de poudre conforme à l'invention ne sont pas blanchies, contrairement aux graines traitées avec des poudres à base de talc.

On observe en outre que les poudres séchantes conformes à l'invention contribuent à la formation d'un film parfaitement régulier autour de la graine.

EP 0 432 036 B1

TABLEAU 3

| Nombre d'agglomérats contenant | Poudre séchante | | |
|---|---|---|---|
| | Talc 2 g/kg | Cellulose 30% Mica 70% 2 g/kg | Cellulose 50% Mica 50% 2 g/kg |
| + 10 graines | 1 | 0 | 0 |
| de 5 à 10 graines | 8 | 0 | 3 |
| de 2 à 5 graines | 10 | 8 | 10 |
| Nombre d'agglomérats total | 19 | 8 | 13 |

## EXEMPLE 4

On a déterminé la toxicité des poudres conformes à l'invention, vis-à-vis des graines en suivant le protocole expérimental suivant :

Des graines de maïs sont pelliculées par une bouillie ayant la composition pondérale suivante :
- Filmogène cellulosique : 13%
- Cormaison® TF1 (agent phytosanitaire) : 19%
- Eau : 68%

Les graines ainsi enrobées sont séchées par une poudre constituée exclusivement de mica à la dose de 2 g par kilogramme de graines.

La faculté germinative au bout de 5 jours est déterminée sur 300 graines déposées sur un buvard stérile humide à la température de 25°C.

Le pourcentage de graines ayant germé dans un test froid (dénommé "cold test") a également été déterminé, sur 100 graines de maïs pelliculées, au bout de 10 jours (7 jours à 10°C + 3 jours à 25°C).

Les mêmes mesures ont été réalisées sur un échantillon témoin (graines de maïs et Cormaison).

Les résultats regroupés au tableau 4 montrent qu'il n'existe pas de différence significative, du point de vue de la toxicité, entre les résultats obtenus avec les graines pelliculées et séchées conformément à l'invention et le témoin.

TABLEAU 4

| | Faculté germinative (%) | Cold test (%) |
|---|---|---|
| Témoin maïs + Cormaison | 94 | 92 |
| Essai maïs pelliculé séché | 92 | 90 |

Un essai plein champ a été réalisé dans une enceinte close non accessible au public sur des maïs pelliculés

7

séchés. Les résultats obtenus indiqués au tableau 4A ci-dessous confirment l'innocuité du traitement.

Des résultats similaires ont été obtenus sur de nombreuses autres graines pelliculées, traitées et séchées par différentes poudres à base de mica, notamment sur colza, soja et tournesol.

TABLEAU 4A

|  | Plantules levées (%) | Plantules vigoureuses (%) |
|---|---|---|
| Témoin | 89,8 | 86,8 |
| Essai | 92,9 | 90,1 |

EXEMPLE 5

Application industrielle au séchage du maïs.

On a traité 5 t de maïs par heure au moyen d'une machine HEID (marque déposée), constituée de deux cylindres en cascade (diamètre : 1 m, longueur : 2 m environ).

L'opération de pelliculage a été réalisée par pulvérisation en tête du premier cylindre d'une bouillie, à raison de 2 kg de bouillie par quintal de maïs.

Cette bouillie est composée d'un agent phytosanitaire (Cormaison® ), d'un agent filmogène cellulosique orangé et d'eau (environ 1,6 kg par quintal de graines).

La poudre séchante constituée de :
- Mica         : 94,5%
- Pigment (oxyde de fer)         : 5%
- Agent d'écoulement         : 0,5%

est introduite en sortie du premier cylindre au moyen d'un doseur à poudre à raison de 200 g/quintal de graines.

Le séchage s'effectue lors du brassage dans le second cylindre.

Des graines de maïs parfaitement pelliculées, d'aspect brillant, non collantes, sont obtenues. Aucun agglomérat n'est détecté.

EXEMPLE 6

Application industrielle au séchage du colza.

Le colza est pelliculé sur une machine HULIN type HB 200, munie d'une double auge de mélange (longueur 5 m environ). Une bouillie constituée des agents phytosanitaires (Mesurol® - Pomarsol®), du filmogène et d'eau (représentant 40% du poids de la bouillie) est introduite en tête de la machine à raison de 6 l/quintal de colza.

La poudre séchante, constituée de :
- Mica         : 70%
- Argile         : 29%
- Agent d'écoulement         : 1%

est introduite par un doseur à poudre aux 2/3 de l'auge de mélange, à la dose de 1 kg/quintal de colza.

Un débit de 3,7 t/h de graines est ainsi traité.

Le colza ressort de la machine parfaitement sec, sans agglomérat.

EXEMPLE 7

Application industrielle au traitement de pois ridés.

On pellicule des poids ridés dans des conditions climatiques telles que la température ambiante est voisine de 10°C, empêchant le séchage des graines par simple courant d'air.

La machine de pelliculage utilisée est de marque Gustafson.

Elle est constituée de deux tambours hexagonaux de 2,5 m de long, de diamètre 0,9 m environ.

Une bouillie de pelliculage contenant, en poids, 60% d'eau, est introduite par un système de godets en tête de la machine.

Une poudre séchante composée de :
- Mica     : 99%
- Agent d'écoulement     : 1%

est introduite à raison de 200 g/quintal de graines par un doseur à poudre.

Le débit de semences traitées est de 10 t/h.

Les pois ridés sortent secs de la machine et peuvent être ensachés directement sans provoquer de salissures dans les sacs.

EXEMPLE 8

Poudres séchantes colorées.

Des poudres séchantes colorées, à base de mica, se sont avérées particulièrement efficaces pour sécher et colorer des graines traitées par un phytosanitaire en solution huileuse ou aqueuse.

Le produit phytosanitaire est réparti par "barattage" sur les graines. La poudre séchante est ensuite saupoudrée et mélangée avec les graines traitées jusqu'à ce qu'une coloration maximale soit développée.

Les semences ainsi obtenues ont un aspect coloré brillant, homogène, un toucher sec. La fixation du produit phytosanitaire est efficace et stable dans le temps.

Les exemples ci-dessous illustrent cette application particulière.

8.1 Séchage de maïs

Une poudre séchante est réalisée par mélange de :
- Mica     : 70 g
- Dioxyde de titane     : 25 g
- Colorant violet en poudre     : 5 g

1,2 g d'un produit phytosanitaire huileux Prowet® EW 500, commercialisé par la Société CIBA-GEIGY, est mélangé avec 100 g de graines de maïs dans une machine HEGE 1, pendant 15 secondes.

1,5 g de la poudre séchante est ensuite saupoudré sur les graines et mélangé pendant 30 secondes au bout desquelles une coloration bleu violacé intense s'est développée.

8.2. Séchage de colza

a) La poudre séchante utilisée est composée de :
- Mica     : 25%
- Méthylcellulose     : 25%
- Pigment nacrant rouge     : 50%

Le pigment nacrant rouge de cette étude est l'Iriodine® 504 fourni par la Société MERCK.

2 g d'un mélange de produits phytosanitaires : Pomarsol (15%) + Isophenphos huileux (85%) sont malaxés dans une machine HEGE 1, avec 100 g de colza.

1,2 g de poudre séchante ci-dessus est ensuite saupoudré, puis malaxé pendant 35 secondes avec les graines traitées.

Les semences obtenues ont un aspect sec, ne présentent aucun agglomérat et sont de couleur pourpre, homogène.

b) On malaxe dans une machine HEGE 1 100 g de colza avec 2 g d'un mélange de phytosanitaire constitué de 0,3 g de Thiram® (poudre) et 1,7 g de Isophenphos® huileux.

Le colza ainsi traité est séché par 3 g d'une poudre ayant pour composition :
- Mica     : 59 g
- Bleu de Prusse     : 20 g
- Dioxyde de titane     : 20 g
- Aerosil     : 1 g

Les graines prennent rapidement une couleur bleue, vive, parfaitement répartie; elles ont un toucher sec.

Aucun agglomérat n'est observé.

**Revendications**

1. Utilisation d'une poudre séchante contenant au moins 50 % en poids, par rapport au poids total de ladite poudre, d'agents absorbants se présentant de préférence sous forme de particules ayant une taille moyenne inférieure à environ 100 μ, lesdits agents absorbants étant constitués d'au moins 25 % en poids, par rapport au poids total desdits agents absorbants, d'au moins un aluminosilicate, pour le séchage de graines ou de semences ayant subi un traitement d'enrobage ou de pelliculage.

2. Utilisation selon la revendication 1, caractérisée en ce que l'aluminosilicate précité est choisi parmi le groupe constitué par le mica, les illites ou argiles micacées, les pigments micacés, le kaolin et ses variétés telles que kaolinite, dickite, nacrite, les montmorillonites ou smectites, les glauconites, les attapulgites, les vermiculites.

3. Utilisation selon la revendication 1, caractérisée en ce que l'aluminosilicate précité est le mica.

4. Utilisation selon l'une quelconque des revendications 1 à 3, caractérisée en ce que ladite poudre séchante précitée contient en outre jusqu'à 50 % en poids d'un pigment, un pigment micacé, un colorant ou une pâte pigmentaire.

5. Utilisation selon l'une quelconque des revendications 1 à 4, caractérisée en ce que la poudre séchante précitée contient en outre jusqu'à 50 % en poids, par rapport au poids total de ladite poudre, d'au moins un agent filmogène.

6. Utilisation selon l'une quelconque des revendications 1 à 5, caractérisée en ce la poudre séchante précitée contient en outre jusqu'à 20 % en poids, par rapport au poids total de ladite poudre, d'au moins un agent d'écoulement, comme en particulier des silices pulvérulentes.

7. Utilisation selon l'une quelconque des revendications 1 à 6, caractérisée en ce que les agents absorbants précités contiennent en outre au moins un agent absorbant choisi parmi le talc, la cellulose ou la silice.

8. Procédé pour le séchage de graines ou de semences ayant subi un traitement d'enrobage ou de pelliculage, caractérisé en ce qu'il comprend le saupoudrage de ces graines ou semences à l'aide d'une poudre séchante utilisée en une quantité de 0,5 à 50 g par kilogramme de graines ou de semences, ladite poudre contenant au moins 50 % en poids, par rapport au poids total de ladite poudre, d'agents adsorbants se présentant de préférence sous forme de particules ayant une taille moyenne inférieure à environ 100 μ, lesdits agents absorbants étant constitués d'au moins 25 % en poids, par rapport au poids total desdits agents absorbants, d'au moins un aluminocilicate.

9. Procédé selon la revendication 8, caractérisé en ce que l'aluminosilicate précité est choisi parmi le groupe constitué par le mica, les illites ou argiles micacées, les pigments micacés, le kaolin et ses variétés telles que kaolinite, dickite, nacrite, les montmorillonites ou smectites, les glauconites, les attapulgites, les vermiculites.

10. Procédé selon la revendication 8, caractérisé en ce que l'aluminosilicate précité est le mica.

11. Procédé selon l'une des revendications 8 à 10, caractérisé en ce que ladite poudre séchante précitée contient en outre jusqu'à 50 % en poids d'un pigment, un pigment micacé, un colorant ou une pâte pigmentaire.

12. Procédé selon l'une des revendications 8 à 11, caractérisé en ce que la poudre séchante précitée contient en outre jusqu'à 50 % en poids, par rapport au poids total de ladite poudre, d'au moins un agent filmogène.

13. Procédé selon l'une des revendications 8 à 12, caractérisé en ce que la poudre séchante précitée contient en outre jusqu'à 20 % en poids, par rapport au poids total de ladite poudre, d'au moins un agent d'écoulement, comme en particulier des silices pulvérulentes.

## Patentansprüche

1. Verwendung eines Trocknungspulvers, das mindestens 50 Gew.-% Absorptionsmittel enthält, bezogen auf das Gesamtgewicht des Pulvers, die vorzugsweise in Form von Teilchen einer mittleren Teilchengröße von weniger als etwa 100 μm vorliegen und zu mindestens 25 Gew.-%, bezogen auf das Gesamtgewicht der Absorptionsmittel, aus mindestens einem Aluminiumsilicat bestehen,

zur Trocknung von Samen oder Saatgut nach einer Behandlung zur Bildung eines Überzugs oder eines Films.

2. Verwendung nach Anspruch 1, dadurch gekennzeichnet, daß das Aluminiumsilicat ausgewählt ist unter Glimmer, Illiten und glimmerartigen Tonen, glimmerartigen Pigmenten, Kaolin und seinen Varietäten, wie Kaolinit, Dickit, Nakrit, Montmorilloniten und Smektiten, Glaukoniten, Attapulgiten und Vermiculiten.

3. Verwendung nach Anspruch 1, dadurch gekennzeichnet, daß das Aluminiumsilicat Glimmer ist.

4. Verwendung nach einem der Ansprüche 1 bis 3, dadurch gekennzeichnet, daß das Trocknungspulver außerdem bis zu 50 Gew.-% eines Pigments, eines glimmerartigen Pigments, eines Färbemittels oder einer Pigmentpaste enthält.

5. Verwendung nach einem der Ansprüche 1 bis 4, dadurch gekennzeichnet, daß das Trocknungspulver außerdem bis zu 50 Gew.-%, bezogen auf das Gesamtgewicht des Pulvers, mindestens eines filmbildenden Mittels enthält.

6. Verwendung nach einem der Ansprüche 1 bis 5, dadurch gekennzeichnet, daß das Trocknungspulver außerdem bis zu 20 Gew.-%, bezogen auf das Gesamtgewicht des Pulvers, mindestens eines Rieselhilfsmittels, wie insbesondere Siliciumdioxidpulver, enthält.

7. Verwendung nach einem der Ansprüche 1 bis 6, dadurch gekennzeichnet, daß die Absorptionsmittel außerdem mindestens ein unter Talk, Cellulose und Siliciumdioxid ausgewähltes Absorptionsmittel enthalten.

8. Verfahren zur Trocknung von Samen oder Saatgut, die einer Behandlung zur Bildung eines Überzugs oder eines Films unterzogen wurden,
gekennzeichnet durch
Behandlung dieser Samen oder des Saatguts mit einem Trocknungspulver, das in einer Menge von 0,5 bis 50 g pro Kilogramm Samen oder Saatgut verwendet wird, wobei das Pulver mindestens 50 Gew.-%, bezogen auf das Gesamtgewicht des Pulvers, an Absorptionsmitteln enthält, die vorzugsweise in Form von Teilchen mit einer mittleren Größe unter ungefähr 100 μm vorliegen und die zu mindestens 25 Gew.-%, bezogen auf das Gesamtgewicht der Absorptionsmittel, aus mindestens einem Aluminiumsilicat bestehen.

9. Verfahren nach Anspruch 8, dadurch gekennzeichnet, daß das Aluminiumsilicat ausgewählt ist unter Glimmer, Illiten oder glimmerartigen Tonen, glimmerartigen Pigmenten, Kaolin und seinen Varietäten wie Kaolinit, Dickit, Nakrit, Montmorilloniten und Smektiten, Glaukoniten, Attapulgiten und Vermiculiten.

10. Verfahren nach Anspruch 8, dadurch gekennzeichnet, daß das Aluminiumsilicat Glimmer ist.

11. Verfahren nach einem der Ansprüche 8 bis 10, dadurch gekennzeichnet, daß das Trocknungspulver außerdem bis zu 50 Gew.-% eines Pigments, eines glimmerartigen Pigments, eines Färbemittels oder einer Pigmentpaste enthält.

12. Verfahren nach einem der Ansprüche 8 bis 11, dadurch gekennzeichnet, daß das Trocknungspulver außerdem bis zu 50 Gew.-%, bezogen auf das Gesamtgewicht des Pulvers, mindestens eines filmbildenden Mittels enthält.

13. Verfahren nach einem der Ansprüche 8 bis 12, dadurch gekennzeichnet, daß das Trocknungspulver außerdem bis zu 20 Gew.-%, bezogen auf das Gesamtgewicht des Pulvers, mindestens eines Rieselhilfemittels wie insbesondere Siliciumdioxidpulver, enthält.

## Claims

1. Use of a dessicant powder containing at least 50% by weight, with respect to the total weight of said powder, of absorbents which are preferably in the form of particles having a mean diameter of less than 100 μ, said absorbents being constituted of at least 25% by weight, with respect to the total weight of said absorbents, of at least one aluminosilicate, for the drying of grains or seeds having undergone a coating or surface film-forming treatment.

2. Use according to claim 1, characterized in that the aforementioned aluminosilicate is selected from the group constituted by mica, the illites or micaceous clays, the micaceous pigments, kaolin and its modifications, such as kaolinite, dickite, nacrite, the montmorillonites or smectites, the glauconites, the attapulgites, the vermiculites.

3. Use according to claim 1, characterized in that the aforementioned aluminosilicate is mica.

4. Use according to any one of claims 1 to 3, characterized in that said afore-mentioned dessiccant powder further contains up to 50% by weight of a pigment, a micaceous pigment, a colouring matter or a pigmentary paste.

5. Use according to any one of claims 1 to 4, characterized in that the afore-mentioned dessiccant powder further contains up to 50% by weight, with respect to the total weight of said powder, of at least one film-forming agent.

6. Use according to any one of claims 1 to 5, characterized in that the afore-mentioned dessiccant powder further contains up to 20% by weight, with respect to the total weight of said powder, of at least one flow-promoting agent, such as, in particular, powdered silicas.

7. Use according to any one of claims 1 to 6, characterized in that the afore-mentioned absorbents further contain at least one absorbent selected from talc, cellulose or silica.

8. Process for the drying of grains or seeds having undergone a coating or surface film-forming treatment, characterized in that it comprises the dusting of said grains or seeds with a dessicant powder used in a quantity of 0.5 to 50 g per kilogram of grains or seeds, said powder containing at least 50% by weight, with respect to the total weight of said powder, of absorbents which are preferably in the form of particles having a mean diameter of less than 100 $\mu$, said absorbents being constituted of at least 25% by weight, with respect to the total weight of said absorbents, of at least one aluminosilicate.

9. Process according to claim 8, characterized in that the aforementioned aluminosilicate is selected from the group constituted by mica, the illites or micaceous clays, the micaceous pigments, kaolin and its modifications, such as kaolinite, dickite, nacrite, the montmorillonites or smectites, the glauconites, the attapulgites, the vermiculites.

10. Process according to claim 8, characterized in that the afore-mentioned aluminosilicate is mica.

11. Process according to one of claims 8 to 10, characterized in that said afore-mentioned dessiccant powder further contains up to 50% by weight of a pigment, a micaceous pigment, a colouring matter or a pigmentary paste.

12. Process according to one of claims 8 to 11, characterized in that the afore-mentioned dessiccant powder further contains up to 50% by weight, with respect to the total weight of said powder, of at least one film-forming agent.

13. Process according to one of claims 8 to 12, characterized in that the afore-mentioned dessiccant powder further contains up to 20% by weight, with respect to the total weight of said powder, of at least one flow-promoting agent, such as, in particular, powdered silicas.